# EUROPÄISCHE PATENTANMELDUNG

(11) **EP 2 119 353 A2**
(43) Veröffentlichungstag der Anmeldung: **18.11.2009**
(21) Anmeldenummer: 09400015.5
(22) Anmeldetag: 30.03.2009
(51) Int. Cl.: A01N 37/44, A01N 43/16, A01N 57/10, A01N 57/12, A01N 59/26, A01N 61/00, A01N 61/02, A01N 63/00, A01N 65/00

(54) **Präparat für Pflanzen**

(30) Priorität: 15.04.2008 DE 102008019619; 20.05.2008 DE 102008024968
(71) Anmelder: Tilco Biochemie GmbH, 23868 Reinfeld (DE)
(72) Erfinder: Scharafat, Iradj, 23843 Travenbrück (DE)
(74) Vertreter: Klickow, Hans-Henning

(57) **Zusammenfassung**

Das Präparat dient zur Behandlung von Pflanzen und besitzt mindestens eine erste Komponente und mindestens eine zur ersten Komponente unterschiedliche zweite Komponente aufweist. Die erste Komponente ist ausgewählt als mindestens ein Element aus der Gruppe K-, Na-, NH4-, Ca-, Mg-, Fe-, Al-, Mn-, Cu-, Zn-, Mono-, Di-, Tri- und alle PolyPhosphate sowie Phosphorsäure oder organische Phosphat-Verbindungen und die erste Komponente ist einzeln und/oder in Form eines Salzes und/oder einer Säure kombiniert mit der zweiten Komponente, die ausgewählt ist als mindestens ein Element aus der Gruppe K-, Na-, NH4-, Ca-, Mg-, Fe-, Al-, Mn-, Cu-, Zn-, Mono-, Di- und alle Poly-Phosphonate sowie Phosphonsäure oder organische Phosphonat-Verbindungen (wie Fosethy-Al, -Na-, -K, -NH4 usw.) oder die zweite Komponente ist ausgewählt als ein Element oder ein Gemisch von mehreren Elementen aus der Gruppe Extrakte, Chitin, Chitosan, Ätherische Öle, Alginate, Pektinate, Oligosaccharide, Aminosäuren, Fette, Öle, Zucker, Huminstoffe, Humusstoffe, Extrakte aus Brennessel, Moos oder anderen Land- und Wasserpflanzen oder synthetischen organischen Stoffen oder mineralische Komponenten einzeln oder gemischt.

## Beschreibung

Die Erfindung betrifft ein Präparat für Pflanzen, das deren Widerstandsfähigkeit gegenüber von Pilzen und/oder Insekten erhöht.

Phosphate (*PO*₄) in Gegenwart von Phosphonaten (*HPO*₃) verhindern das Eindringen der Phosphonate (*HPO*₃) in die Phatogene. Phosphonate (*HPO*₃) können aber, in Gegenwart von Phosphaten (*PO*₄), in die Zellwände der Mycele aufgenommen werden, wodurch die supersoren Eigenschaften ausgeschaltet werden und ein die Pflanze beeinträchtigender Pilz sogar zum Elicitor umfunktioniert werden kann.

Die Pflanzen bilden nach einer Applikation von Phosphaten (*PO*₄) in Gegenwart von Phosphonaten (*HPO*₃) erst dann Abwehrstoffe, wenn der Pilz in den Pflanzenzellen Oligosaccharide abgibt. Oligosaccharide in Gegenwart von Phosphaten und/oder Phosphonaten lösen eine Kaskade an Phytoalexinen in der Pflanze aus. Die Pflanzen bilden Salizylsäure, Jasmonsäure, Ethylen, LOX, PAL in Gegenwart von Phosphaten (*PO*₄), Phosphonaten (*HPO*₃) und Oligosacchariden aus dem Pilz. Die Pflanze erwacht und bildet Abwehrstoffe gegen das Phatogen, es entsteht somit eine "induzierte Resistenz"-Wirkung nach Applikation und Pilzbefall.

Die Anwesenheit von Phosphaten in Gegenwart von Phosphonaten und/oder Phosphiten wurde in der Vergangenheit überwiegend als nachteilig angesehen, da die Phosphate schnell in die Pflanze eindringen und die Aufnahmefähigkeit der Pflanze für Phosphonate und/oder Phosphite vermindern.

Aufgabe der vorliegenden Erfindung ist es, ein Präparat der einleitend genannten Art derart zu verbessern, daß eine hohe Wirksamkeit bei geringen unerwünschten Nebenwirkungen erreicht werden kann.

Diese Aufgabe wird dadurch gelöst, daß die erste Komponente ausgewählt ist als mindestens ein Element aus der Gruppe K-, Na-, NH4-, Ca-, Mg-, Fe-, Al-, Mn-, Cu-, Zn-, Mono-, Di-, Tri- und alle Poly-Phosphate sowie Phosphorsäure oder organische Phosphat-Verbindungen und wobei die erste Komponente einzeln und/oder in Form eines Salzes und/oder einer Säure kombiniert ist mit der zweiten Komponente, die ausgewählt ist als mindestens ein Element aus der Gruppe K-, Na-, NH4-, Ca-, Mg-, Fe-, Al-, Mn-, Cu-, Zn-, Mono-, Di- und alle Poly-Phosphonate sowie Phosphonsäure, Polyphosphonate oder organische Phosphonat-Verbindungen (wie Fosethy-Al, -Na-, - K, -NH4 usw.) oder bei dem die zweite Komponente ausgewählt ist als mindestens ein Element oder ein Gemisch von mehreren Elementen aus der Gruppe Extrakte, Chitin, Chitosan, Ätherische Öle, Alginate, Pektinate, Oligosaccharide, Aminosäuren, Fette, Öle, Zucker, Huminstoffe, Humusstoffe, Extrakte aus Brennessel, Moos oder anderen Land- und Wasserpflanzen oder synthetischen organischen Stoffen oder mineralische Komponenten einzeln oder gemischt.

Ein Produkt, das außer Phosphaten (*PO*₄) und Phosphonaten (*HPO*₃) auch Oligosaccharide aus Algen, Pektin oder andere Zuckermoleküle, oder Laminarin oder Betain sowie Aminosäuren (pflanzlich oder tierisch) oder Chitosane enthält, führt zu echter "induzierter Resistenz" ohne Gegenwart und Einfluß der Parasiten. Das Produkt hat keine direkte Wirkung auf die Parasiten und wandelt die Parasiten sogar zu Elicitoren um. Es wird somit eine indirekte Einwirkung optimiert.

Die Produkte können entweder ("induzierte Resistenz" in Gegenwart eines Parasiten)
a) ein oder mehrere Phosphatsalze oder Säuren (*PO*₄) und/oder
b) ein oder mehrere Phosphonat-Salze oder Säuren (*HPO*₃) enthalten.
   Sie können auch ("induzierte Resistenz" ohne Gegenwart des Parasiten = Pflanzen-Impfstoff)
c) pflanzliche oder auch tierische Inhaltsstoffe (aus Land- und oder Wasserorganismen) Saccharide und Oligosaccharide, Zuckermoleküle, Betain, Huminsäuren, Chitin, Chitosane und/oder
d) andere Salze von synthetischen anorganischen bzw. organischen Verbindungen enthalten.

Eine Applikation von (*HPO*₃)-Ionen (Phosphonat-Ionen) kann bei Phosphat-Mangel (*PO*₄) im Boden oder in der Pflanze Schäden verursachen. Die Pflanzen haben im Laufe der Evolution verlernt, mit (*HPO*₃)-Ionen umzugehen. Bei (*PO*₄)-Mangel können die überschüssigen (*HPO*₃)-Ionen (Phosphonat-Ionen) nicht schnell genug verarbeitet werden. Die Folge ist eine Schädigung der Pflanze. Auch die Pilze können mit (*HPO*₃)-Ionen (Phosphonat-Ionen) ohne (*PO*₄)-Ionen physiologisch nicht zurecht kommen. Sowohl Pflanzen als auch die Pilzarten haben keine Probleme mit (*HPO*₃)-Ionen Phosphonat-Ionen) zurecht zu kommen, wenn (*PO*₄)-Ionen gegenwärtig sind.

Ein Parasiten abtötender Effekt wird bei einer Anwendung der Produktkombinationen nicht gewünscht, damit der Parasit keine Chance erhält, gegen das Produkt durch Mutagenität neue "resistente Rassen" zu bilden. Der Pilz hat auch keine Chance die Pflanzen zu überlisten und neue "resistente Rassen" zu bilden, weil die Pflanzen den Pilzen zuvorkommen durch Bildung einer großen Anzahl an Abwehrstoffen, um den Parasiten zu eliminieren.

Die Applikation des Präparates kann beispielsweise durch Spritzen, über die Wurzeln der Pflanzen oder durch Injektion erfolgen. Das Spritzen unterstützt insbesondere eine direkte Aufnahme über die Blätter.

## Patentansprüche

1. Präparat zur Behandlung von Pflanzen, das mindestens eine erste Komponente und mindestens eine zur ersten Komponente unterschiedliche zweite Komponente aufweist, **dadurch gekennzeichnet, daß** die erste Komponente ausgewählt ist als mindestens ein Element aus der Gruppe K-, Na-, NH4-, Ca-, Mg-, Fe-, Al-, Mn-, Cu-, Zn-, Mono-, Di-, Tri- und alle Poly-Phosphate sowie Phosphorsäure oder organische Phosphat-Verbindungen und wobei die erste Komponente einzeln und/oder in Form eines Salzes und/oder einer Säure kombiniert ist mit der zweiten Komponente, die ausgewählt ist als mindestens ein Element aus der Gruppe K-, Na-, NH4-, Ca-, Mg-, Fe-, Al-, Mn-, Cu-, Zn-, Mono-, Di- und alle Poly-Phosphonate sowie Phosphonsäure oder organische Phosphonat-Verbindungen (wie Fosethy-Al, -Na-, -K, - NH4 usw.) oder bei dem die zweite Komponente ausgewählt ist als mindestens ein Element oder ein Gemisch von mehreren Elementen aus der Gruppe Extrakte, Chitin, Chitosan, Ätherische Öle, Alginate, Pektinate, Oligosaccharide, Aminosäuren, Fette, Öle, Zucker, Huminstoffe, Humusstoffe, Extrakte aus Brennessel, Moos oder anderen Land- und Wasserpflanzen oder synthetischen organischen Stoffen oder mineralische Komponenten einzeln oder gemischt.

2. Präparat nach Anspruch 1, **dadurch gekennzeichnet, daß** eine Ausbildung als Spritzmittel realisiert ist.

3. Präparat nach Anspruch 1, **dadurch gekennzeichnet, daß** eine Ausbildung als Injektionsmittel realisiert ist.

4. Präparat nach Anspruch 1, **dadurch gekennzeichnet, daß** eine Ausbildung als Substrat zur Aufnahme über die Pflanzenwurzeln realisiert ist.
